# EUROPÄISCHE PATENTSCHRIFT

(11) **EP 0 491 703 B1**
(45) Veröffentlichungstag und Bekanntmachung des Hinweises auf die Patenterteilung: **30.11.1994**
(21) Anmeldenummer: 90910555.3
(22) Anmeldetag: 26.07.1990
(51) Int. Cl.: G01P 1/02

(54) **SENSOR, INSBESONDERE DREHZAHLFÜHLER**
SENSOR, ESPECIALLY ROTATION SPEED PROBE
CAPTEUR, EN PARTICULIER DETECTEUR DU NOMBRE DE TOURS-MINUTE

(30) Priorität: 14.09.1989 DE 3930702
(43) Veröffentlichungstag der Anmeldung: 01.07.1992
(73) Patentinhaber: ROBERT BOSCH GMBH, 70442 Stuttgart (DE)
(72) Erfinder: PFANDER, Werner, D-7012 Fellbach (DE); LEO, Kristian, D-7151 Burgstetten 1 (DE); HEYER, Klaus, D-7149 Freiberg/Neckar (DE); KÖHLER, Uwe, D-7148 Remseck 5 (DE); HERDERICH, Hans-Jürgen, Anderson, SC 29621 (US)
(86) Internationale Anmeldenummer: DE9000567
(87) Internationale Veröffentlichungsnummer: WO9104494

(56) Entgegenhaltungen:
- EP-A- 0 149 217
- EP-A- 0 194 213
- EP-A- 0 278 806

## Beschreibung

### Stand der Technik

Die Erfindung geht aus von einem Sensor nach der Gattung des Anspruchs 1.

Es sind bereits elektromagnetische Meßfühler zur Verwendung als Geschwindigkeitssensoren in Kraftfahrzeugen bekannt (EP-A-194 213 und EP-A-278 806). Die Meßfühler besitzen ein zweiteiliges Gehäuse, in dessen einem Gehäuseteil im wesentlichen die elektrischen Sensorelemente aufgenommen sind. Das zweite Gehäuseteil ist durch Umspritzen des ersten Gehäusteils mit Kunststoff erzeugt, wobei das zweite Gehäuseteil entlang dem gesamten Umfang einer Kontaktzone beider Gehäuseteile das erste Gehäuseteil umgreift. Da das erste Gehäuseteil im Bereich der Kontaktzone einen vom zweiten Gehäuseteil eingehüllten, kragenförmig umlaufenden Vorsprung hat, ist außer einer kraftschlüssigen Verbindung auch eine formschlüssige Verbindung beider Gehäuseteile erzielt. Dennoch ist eine solche Verbindung auf Dauer nicht feuchtigkeitsdicht, insbesondere wenn das Gehäuse hohen Temperaturwechselbelastungen, Schwingungen oder Querkräften durch Montagefehler ausgesetzt ist.

Aus dem Fachlexikon "ABC Chemie", 1979, Verlag Harri Deutsch, Thun, Frankfurt/Main, ist es bekannt, gleich- oder verschiedenartige Stoffe durch Klebstoff miteinander ohne Veränderung ihres Gefüges zu verbinden. Dabei muß zum Beispiel ein Schmelzklebstoff, der auf die feste Oberfläche der zu verbindenden Werkstücke aufgebracht wird, duch Erhitzen verflüssigt werden. Das Abbinden des Klebstoffs erfolgt durch Erstarren der Schmelze. Das Kleben hat bei der Verbindung von Gehäuseteilen für Sensoren bisher keine Anwendung gefunden.

Es ist schon ein Drehzahlfühler bekannt (DE-A-34 00 870), bei dem das erste Gehäuseteil ein zur Aufnahme eines Polkerns, einer Spule sowie von zwei Stromschienen bestimmter Spulenträger aus Kunststoff ist. Nach der Komplettierung des Spulenträgers mit den erwähnten elektrischen Bauteilen wird dieser in einem zweiten Gehäuseteil aufgenommen. Dieses ist in einem Spritzgießvorgang aus Kunststoff hergestellt und mit dem eingebetteten Ende einer Leitung versehen. Das im wesentlichen von den beiden Gehäuseteilen gebildete Gehäuse des Drehzahlfühlers hat noch eine Öffnung, die nach dem Anschluß der Leitung an die Stromschienen durch Einsetzen eines Deckels verschlossen wird. Ein derartiger Drehzahlfühler ist hohen Belastungen, insbesondere durch Feuchtigkeit, Schmutz, Wärme und Erschütterungen, ausgesetzt. Der durch das Einfügen des ersten Gehäuseteils erzielte Formschluß mit dem zweiten Gehäuseteil sowie das Einfügen des Deckels schützen den Drehzahlfühler jedoch nicht sicher vor dem Eindringen von Feuchtigkeit, was zu Störungen oder Ausfall führen kann. Deshalb sind beide Gehäuseteile in ihrer Kontaktzone sowie der Deckel mit dem zweiten Gehäuseteil zusätzlich durch Ultraschallschweißen stoffschlüssig verbunden. Diese Maßnahme verteuert den Drehzahlfühler, weil sie zusätzliche Montageschritte und einen erheblichen apparativen Aufwand bedingt.

### Vorteile der Erfindung

Der erfindungsgemäße Sensor mit den Merkmalen des Anspruchs 1 hat demgegenüber den Vorteil, daß die in der Kontaktzone der beiden Gehäuseteile erzielte stoffschlüssige Verbindung völlig flüssigkeitsdicht ist. Sie liegt geschützt innerhalb der von Gehäuseteilen gebildeten Wandung des Sensorgehäuses.

Im Anspruch 2 sind zweckmäßige Ausführungsformen von das Schmelzelement bildenden Halbzeugen angegeben.

Das im Anspruch 3 gekennzeichnete, erfindungsgemäße Verfahren für die Herstellung des Sensors zeichnet sich in vorteilhafter Weise dadurch aus, daß die Dichtheit des Gehäuses bereits mit dem Erzeugen des zweiten Gehäuseteils erzielt wird, weil das Schmelzelement beim Umspritzen des ersten Gehäuseteils durch den schmelzflüssigen Kunststoff eine Erwärmung über seinen Schmelzpunkt erfährt, was zum stoffschlüssigen Verbinden beider Gehäuseteile führt.

Die Weiterbildung des Verfahrens nach Anspruch 4 ist von Vorteil, weil hierdurch das Schmelzen des Schmelzelements und Verbinden der Gehäuseteile verbessert wird, insbesondere wenn im Zuge des Spritzvorgangs der Wärmeübergang auf das Schmelzelement unzureichend ist.

Mit der im Anspruch 5 gekennzeichneten Weiterbildung des Verfahrens wird in vorteilhafter Weise erreicht, daß das aus unterschiedlichen Halbzeugformen erstellte Schmelzelement geschützt vor Beschädigung und Lage gesichert am ersten Gehäuseteil aufgenommen ist.

Der weitergebildete Verfahrensschritt nach Anspruch 6 hat den Vorteil, daß die Lagesicherung des Schmelzelements und dessen Verbindung mit dem ersten Gehäuseteil verbessert wird.

### Zeichnung

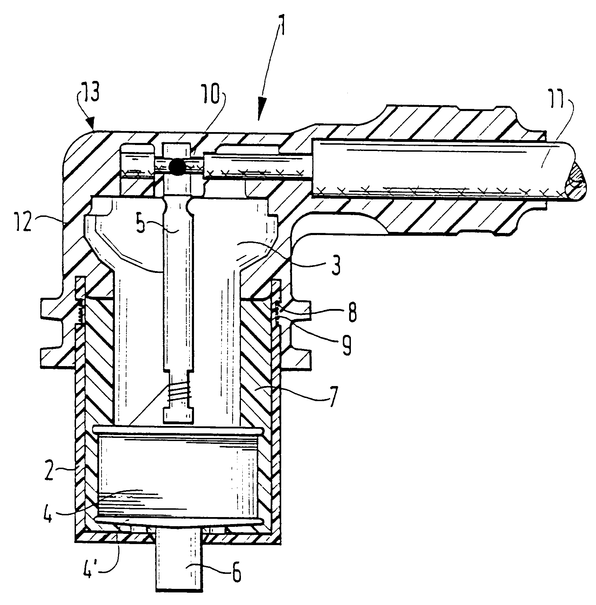

Ein Ausführungsbeispiel der Erfindung ist in der Zeichnung anhand eines Längsschnittes durch einen Drehzahlfühler als Sensor vereinfacht dargestellt und in der nachfolgenden Beschreibung näher erläutert.

### Beschreibung des Ausführungsbeispiels

Der in der Zeichnung wiedergegebene Sensor ist als Drehzahlfühler 1 ausgebildet, welcher zur Verwendung für Blockierschutz- und/oder Antriebsschlupf-Regelsysteme von Kraftfahrzeugen vorgesehen ist. Er ist auch als Element für die Motorregelung und die Benzin- oder Dieseleinspritzregelung geeignet. Der Drehzahlfühler 1 hat ein nach oben offenes, topfförmiges erstes Gehäuseteil 2 aus einem thermoplastischen Kunststoff, wie Polyamid oder dergleichen. In das Gehäuseteil 2 ist ein Spulenträger 3 mit einer eine Wicklung aufweisenden Spule 4 eingesetzt. Die Wicklung der Spule 4 ist an zwei (in der Zeichnung hintereinanderliegenden) Stromschienen 5 angeschlossen, welche nach oben über den Spulenträger 3 hinausragen. Nach unten ist der Gehäuseteil 2 zum Durchtritt eines Polstiftes 6 durchbrochen. Die erwähnten elektrischen Bauteile des Drehzahlfühlers 1 sind durch eine Vergußmasse 7, wie Epoxidharz oder dergleichen, feuchtigkeitsdicht im ersten Gehäuseteil 2 fixiert.

Das erste Gehäuseteil 2 hat an seinem oberen Endabschnitt umfangsseitig eine nutförmige Vertiefung 8, in die ein den Nutgrund bedeckendes Schmelzelement 9 aus einem Kunststoff, wie Polyamid oder dergleichen, mit niedrigerem Schmelzpunkt als demjenigen des Gehäuseteils 2 eingefügt ist. Das Schmelzelement 9 kann als Faden ausgebildet sein, der in mehreren nebeneinanderliegenden Windungen sowie übereinanderliegenden Lagen die Vertiefung 8 teilweise oder völlig ausfüllt. Das Schmelzelement 9 kann aber auch eine ein- oder mehrlagig in die Vertiefung 9 eingebrachte Folie, ein Band oder ein in zähflüssigem Zustand aufgetragener, aushärtender Film sein.

Zur Stromversorgung der Spule 4 sowie zur Signalabnahme sind die freien Enden der den Spulenträger 3 überragenden Stromschienen 5 jeweils mit einem Leiter 10 einer zweiadrigen Mantelleitung 11 kontaktiert.

In diesem Montagezustand werden der erste Gehäuseteil 2 mit angeschlossener Mantelleitung 11 in ein nicht dargestelltes Spritzgießwerkzeug eingelegt und zur Bildung eines zweiten Gehäuseteils 12 des Drehzahlfühlers 1 mit einem thermoplastischen Kunststoff, wie Polyamid oder dergleichen, umspritzt. Dabei hüllt das zweite Gehäuseteil 12 den Endabschnitt der Mantelleitung 11, deren Leiter 10, die Stromschienen 5 und den Spulenträger 3 ein. Außerdem übergreift das zweite Gehäuseteil 12 den oberen Endabschnitt des ersten Gehäuseteiles 2 unter Bildung einer Kontaktzone, in welcher die Vertiefung 8 mit eingefügtem Schmelzelement 9 liegt. Durch diesen Formvorgang ist das aus dem ersten Gehäuseteil 2 und dem zweiten Gehäuseteil 12 bestehende Gehäuse 13 des Drehzahlfühlers 1 vervollständigt.

Der für das zweite Gehäuseteil 12 verwendete Kunststoff hat einen Schmelzpunkt, welcher vorzugsweise demjenigen des für das erste Gehäuseteil 2 gewählten Kunststoffs entspricht oder über diesem Schmelzpunkt liegt. Der Schmelzpunkt des Kunststoffs für den zweiten Gehäuseteil liegt somit ebenfalls über dem Schmelzpunkt des Kunststoffs, aus dem das Schmelzelement 9 hergestellt ist. Beim Einspritzen des schmelzflüssigen Kunststoffs für die Bildung des zweiten Gehäuseteiles 12 in die Spritzgießform umhüllt dieser das Schmelzelement 9, welches hierdurch über seinen Schmelzpunkt erwärmt wird und sich stoffschlüssig sowohl mit dem ersten Gehäuseteil 2 als auch mit dem erstarrenden zweiten Gehäuseteil 12 verbindet. Die hierdurch in der Kontaktzone erzeugte Verbindung der beiden Gehäuseteile 2 und 12 ist völlig feuchtigkeitsdicht.

In Abwandlung des beschriebenen Herstellungsprozesses des Drehzahlfühlergehäuses 13 kann das Schmelzelement 9 nach dem Einbringen in die Vertiefung 8 des ersten Gehäuseteiles 2 bereits einer Wärmebehandlung unterzogen werden, mit der durch Aufschmelzen des Schmelzelementes 9 bereits eine innige, stoffschlüssige Verbindung mit dem ersten Gehäuseteil 2 erzielt wird. Außerdem wird hierdurch eine Lagesicherung des Schmelzelementes 9 in der Vertiefung 8 erreicht.

Ferner kann eine feuchtigkeitsdichte, stoffschlüssige Verbindung der beiden Gehäuseteile 2 und 12 auch dadurch hergestellt werden, daß in einem Wärmebehandlungsvorgang des Drehzahlfühlers 1 nach dem Erzeugen des zweiten Gehäuseteils 2 das Schmelzelement 9 über seinen Schmelzpunkt erwärmt wird. Dabei schmilzt das Schmelzelement 9 und geht eine stoffschlüssige Verbindung mit den beiden Gehäuseteilen 2 und 12 ein. Diese Vorgehensweise ist dann angebracht, wenn beim Formen des zweiten Gehäuseteils 2 die Erwärmung des Schmelzelements 9 unzureichend ist.

Abweichend vom beschriebenen Ausführungsbeispiel kann das Schmelzelement 9 auch an der freien Seitenfläche des Schildes 4′ der Spule 4 angeordnet werden, welcher an den Polstift 6 angrenzt. Bei dieser Variante kommen das erste Gehäuseteil 2 und die Vergußmasse 7 in Wegfall. Der Spulenschild 4′ tritt vielmehr an die Stelle des ersten Gehäuseteils 2. Beim Spritzgießen des zweiten Gehäuseteiles 12 wird der vom ersten Gehäuseteil 2 und der Vergußmasse 7 des ursprünglichen Ausführungsbeispiels eingenommene Raum vom der Erzeugung des zweiten Gehäuseteils dienenden Kunststoff eingenommen. Die freie Seitenfläche des Schildes 4′ kann das Schmelzelement 9 in einer stirnseitig umlaufenden Vertiefung aufnehmen, wobei das Schmelzelement vorzugsweise als Ringscheibe ausgebildet ist oder als Film aufgebracht wird.

## Patentansprüche

1. Sensor, insbesondere Drehzahlfühler (1) für Blockierschutz- und/oder Antriebsschlupf-Regelsysteme, für die Motorregelung und/oder Benzin- oder Dieseleinspritzregelung von Kraftfahrzeugen, mit einem elektrische Bauteile aufnehmenden Gehäuse (13) mit einem ersten Gehäuseteil (2) aus Kunststoff, welches von einem zweiten, ebenfalls aus Kunststoff durch Spritzgießen erzeugten Gehäuseteil (12) teilweise umhüllt ist, wobei auf dem gesamten Umfang der durch Umspritzen des ersten Gehäuseteils (2) mit dem zweiten Gehäuseteil (12) erzeugten Kontaktzone eine Verbindung beider Gehäuseteile (2, 12) erzielt ist, dadurch gekennzeichnet, daß in der Kontaktzone beider Gehäuseteile (2, 12) ein eine feuchtigkeitsdichte, stoffschlüssige Verbindung mit beiden Gehäuseteilen (2, 12) erzeugendes Schmelzelement (9) aus einem Kunststoff mit niedrigerem Schmelzpunkt als demjenigen des/der die Gehäuseteile (2, 12) bildenden Kunststoffs/Kunststoffe in einer umfangsseitig oder stirnseitig umlaufenden Vertiefung (8) des ersten Gehäuseteils (2) angeordnet ist.

2. Sensor nach Anspruch 1, dadurch gekennzeichnet, daß das in der Vertiefung (8) aufgenommene Schmelzelement (9) ein Faden oder eine Folie oder ein Band oder ein zähflüssiger, erstarrender Film ist.

3. Verfahren zur Herstellung eines Sensors gemäß Anspruch 1, insbesondere eines Drehzahlfühlers für Blockierschutz- und/oder Antriebsschlupf-Regelsysteme, für die Motorregelung und/oder Benzin- oder Dieseleinspritzregelung von Kraftfahrzeugen, mit einem elektrische Bauteile enthaltenden Gehäuse,
- bei dem ein erstes Gehäuseteil aus einem Kunststoff in einem Spritzgießwerkzeug aufgenommen,
- und das erste Gehäuseteil zur Bildung eines zweiten Gehäuseteils teilweise mit Kunststoff umspritzt wird, wobei das zweite Gehäuseteil den gesamten Umfang einer Kontaktzone des ersten Gehäuseteils umgreift und eine Verbindung beider Gehäuseteile erzielt,
gekennzeichnet durch die Verfahrensschritte:
- in einer umfangsseitig oder stirnseitig umlaufenden Vertiefung des ersten Gehäuseteils wird vor dem Einbringen in das Spritzgießwerkzeug auf dem gesamten Umfang der Kontaktzone mit dem zu erzeugenden zweiten Gehäuseteil ein Schmelzelement aus einem Kunststoff mit niedrigerem Schmelzpunkt als demjenigen des/der die Gehäuseteile bildenden Kunststoffs/Kunststoffe aufgebracht,
- das Schmelzelement wird während dem Umspritzen zur Bildung des zweiten Gehäuseteils über seinen Schmelzpunkt erhitzt.

4. Verfahren nach Anspruch 3, dadurch gekennzeichnet, daß nach dem Erzeugen des zweiten Gehäuseteils der Sensor einem Wärmebehandlungsvorgang unterworfen wird, in dem das Schmelzelement über seinen Schmelzpunkt erwärmt wird.

5. Verfahren nach Anspruch 3 und/oder 4, dadurch gekennzeichnet, daß in eine umfangsseitige oder stirnseitige, umlaufende Vertiefung des ersten Gehäuseteils als Schmelzelement ein Faden oder eine Folie gewickelt oder ein Band eingelegt oder ein zähflüssiger, erstarrender Film aufgebracht wird.

6. Verfahren nach Anspruch 3, 4 oder 5, dadurch gekennzeichnet, daß das Schmelzelement vor der Erzeugung des zweiten Gehäuseteils auf das erste Gehäuseteil aufgeschmolzen wird.

## Claims

1. Sensor, in particular rotational speed sensor (1) for anti-lock control systems and/or traction-slip control systems, for engine regulation and/or petrol or diesel fuel injection regulation of motor vehicles, with a housing (13) which accommodates electrical components and comprises a first housing part (2) of plastic, which is partly enclosed by a second housing part (12) which is also produced from plastic by injection moulding, a connection of the two housing parts (2, 12) being obtained over the entire circumference of the contact zone produced by injection moulding the second housing part (12) around the first housing part (2), characterized in that, in the contact zone between the two housing parts (2, 12), a fusible element (9) which produces a moisture-tight integral connection to both housing parts (2, 12) and consists of plastic with a lower melting point than that of the plastic/plastics forming the housing parts (2, 12) is arranged in a depression (8) running round the circumferential side or end side of the first housing part (2).

2. Sensor according to Claim 1, characterized in that the fusible element (9) accommodated in the depression (8) is a filament or a film or a tape or a viscous, solidifying film.

3. Process for producing a sensor according to Claim 1, in particular a rotational speed sensor for anti-lock control systems and/or traction-slip control systems, for engine regulation and/or petrol or diesel fuel injection regulation of motor vehicles, with a housing containing electrical components, in which a first housing part made of a plastic is placed in an injection mould and plastic is injection moulded partly around the first housing part to form a second housing part, the second housing part engaging around the entire circumference of a contact zone of the first housing part and a connection of the two housing parts being obtained, characterized by the following process steps:
- in a depression running round the circumferential side or end side of the first housing part, before introduction into the injection mould, a fusible element made of a plastic with a lower melting point than that of the plastic/plastics forming the housing parts is applied to the entire circumference of the contact zone with the second housing part to be produced,
- the fusible element is heated above its melting point during the injection moulding to form the second housing part.

4. Process according to Claim 3, characterized in that, after the production of the second housing part, the sensor is subjected to a heat-treatment process in which the fusible element is heated above its melting point.

5. Process according to Claim 3 and/or 4, characterized in that, as fusible element, a filament or a film is wound or a tape is inserted or a viscous, solidifying film is applied into a circumferential-side or end-side, surrounding depression is in the first housing part.

6. Process according to Claim 3, 4 or 5, characterized in that the fusible element is fused onto the first housing part before the second housing part is produced.

## Revendications

1. Capteur, notamment compte-tours (1), pour les systèmes de régulation anti-blocage et/ou anti-patinage, pour la régulation d'un moteur et/ou la régulation de l'injection d'essence ou de gazole dans des véhicules automobiles, comprenant un boîtier (13) recevant les composants électriques, ce boîtier étant formé d'une première partie (2) en matière plastique entourée partiellement d'une deuxième partie (12) également en matière plastique, fabriquée par injection, une liaison entre les deux parties de boîtier (2, 12) étant réalisée sur toute la périphérie de la zone de contact, formée par injection, de la seconde partie de boîtier (12) autour de la première partie (2), caractérisé en ce que dans la zone de contact des deux parties (2, 12) du boîtier, on a un élément fusible (9) créant une liaison par la matière, étanche à l'humidité, entre les deux parties de boîtier (2, 12), cet élément fusible étant en matière plastique à point de fusion inférieur à celui de la ou des matières plastiques des parties de boîtier (2, 12) dans la cavité (8) périphérique frontale ou dans le bord de la première partie de boîtier (2).

2. Capteur selon la revendication 1, caractérisé en ce que l'élément fusible (9) logé dans la cavité (8) est un fil ou une feuille ou un ruban ou un film fluide qui se rigidifie.

3. Procédé de fabrication d'un capteur selon la revendication 1, notamment d'un compte-tours pour des systèmes de régulation anti-blocage, anti-patinage et/ou d'entraînement, pour réguler le moteur et/ou la régulation d'injection de gazole ou d'essence sur des véhicules automobiles à boîtier contenant un composant électrique,
- selon lequel une première partie du boîtier en matière plastique est placée dans un outil d'injection,
- et la première partie de boîtier est injectée tout autour, partiellement avec de la matière plastique pour former une seconde partie de boîtier, la seconde partie de boîtier entourant toute la périphérie d'une zone de contact de la première partie et réalisant une liaison entre les deux parties du boîtier,
caractérisé par les étapes de procédé suivantes :
- dans une cavité réalisée à la périphérie ou une cavité frontale périphérique dans la première partie du boîtier, avant la mise en place dans le moule d'injection, on met sur toute la périphérie de la zone de contact avec la future deuxième partie du boîtier, un élément fusible en matière plastique dont le point de fusion est inférieur à celui de la ou des matières plastiques formant les parties de boîtier,
- pendant l'injection, pour former la seconde partie du boîtier, on chauffe l'élément fusible au-delà de son point de fusion.

4. Procédé selon la revendication 3, caractérisé en ce qu'après avoir réalisé la seconde partie du boîtier du capteur, on la soumet à une opération de traitement thermique au cours de laquelle on chauffe l'élément fusible au-delà de son point de fusion.

5. Procédé selon la revendication 3 et/ou 4, caractérisé en ce que dans une cavité périphérique ou frontale circulaire de la première partie du boîtier, on introduit un élément fusible en forme de fil ou de feuille, bobiné, ou une bande ou un film pâteux susceptible de se figer.

6. Procédé selon les revendications 3, 4 ou 5, caractérisé en ce que l'élément fusible est fondu sur la première partie du boîtier avant que l'on réalise la seconde partie de boîtier.
